(19) **Europäisches Patentamt / European Patent Office / Office européen des brevets**

(11) **EP 1 213 779 B1**

(12) **EUROPÄISCHE PATENTSCHRIFT**

(45) Veröffentlichungstag und Bekanntmachung des Hinweises auf die Patenterteilung:
**29.10.2008 Patentblatt 2008/44**

(51) Int Cl.:
***H01M 8/06*** *(2006.01)*

(21) Anmeldenummer: **01127173.1**

(22) Anmeldetag: **16.11.2001**

(54) **Brennstoffzellensystem mit zugeordnetem Gaserzeugungssystem**

Fuel cell system having an associated gas producing system

Système de piles à combustible comprenant un système produisant de gaz

(84) Benannte Vertragsstaaten:
**DE FR GB IT**

(30) Priorität: **01.12.2000 DE 10059674**

(43) Veröffentlichungstag der Anmeldung:
**12.06.2002 Patentblatt 2002/24**

(73) Patentinhaber: **NuCellSys GmbH
73230 Kirchheim/Teck-Nabern (DE)**

(72) Erfinder: **Griesmeier, Uwe
88677 Markdorf (DE)**

(74) Vertreter: **Kocher, Klaus-Peter et al
Daimler AG
Intellectual Property and Technology
Management
GR/VI, H512
70546 Stuttgart (DE)**

(56) Entgegenhaltungen:

| | |
|---|---|
| WO-A- 00/66487 | DE-C- 19 755 116 |
| US-A- 5 928 614 | US-A- 5 948 221 |
| US-A- 6 123 913 | |

**Beschreibung**

Die Erfindung betrifft ein Brennstoffzellensystem und ein Verfahren zum Betreiben des Brennstoffzellensystems gemäß dem Oberbegriff der unabhängigen Ansprüche.

Aus der DE 196 24 435 C1 ist ein Reformierungsreaktor bekannt, der zur Wasserdampfreformierung für Methanol verwendet werden kann. Dabei wird zur Temperaturstabilisierung der verschiedenen Reaktorstufen eine Heizeinrichtung für eine mittlere Stufe vorgesehen, während die eintrittsseitigen und die austrittsseitigen Stufen als Wärmetauscher ausgebildet sind. Bei der Methanol-Reformierungsreaktion fällt Kohlenmonoxid an, welches aus dem Reformat entfernt werden muß. Allgemein ist es schwierig, die bei einer üblicherweise nachfolgenden Wassergas-Shiftreaktion anfallende Abwärme aus dem System zu entfernen, um einen ausgewogenen thermischen Haushalt zu gewährleisten, der ausreichende Dynamik aufweist.

Ferner beschreibt die US 6,123,913 A einen Reformer zur Erzeugung eines wasserstoffhaltigen Reformatgases, welches einer Brennstoffzelle zugeführt wird.

Der Erfindung liegt die Aufgabe zugrunde, ein Brennstoffzellensystem anzugeben, bei dem die Reformierungseinheit vereinfacht ist.

Diese Aufgabe wird bei einem Brennstoffzellensystem mit den Merkmalen des Anspruchs 1 und bei einem Verfahren mit den Merkmalen des Anspruchs 15 gelöst.

Gemäß der Erfindung kann auf Wärmetauscher bei der Reformierung und anschließenden Gasreinigung weitgehend verzichtet werden. Die Reformierungsreaktoren können einfach und kompakt aufgebaut werden. Die Fertigungskosten der Reaktoren können so verringert werden. Das System weist weniger Komponenten auf, und der Druckverlust im Gaserzeugungssystem wird verringert.

Vorteilhaft ist, daß das Methanol-Reformierungssystem sehr einfach und daher kostengünstig ist. Im Reformierungsbereich sind keine Wärmetauscher notwendig, sondern es können adiabate Reaktoren eingesetzt werden. Der Wirkungsgrad ist gut, vor allem bei niedrigem Systemdruck. Das System kann jedoch auch im Hochdruckbereich arbeiten. Ein Teil des Kraftstoffs darf Verunreinigungen enthalten, da diese in dem adiabaten Hochtemperaturreaktor abgebaut werden können. Dies führt zu einer Kosteneinsparung, da weniger hochreine Kraftstoffe verwendet werden kann.

Weitere Vorteile und Ausgestaltungen der Erfindung gehen aus den weiteren Ansprüchen und der Beschreibung hervor.

Die Erfindung ist nachstehend anhand einer Zeichnung näher beschrieben, wobei die Figuren zeigen:

Fig. 1     eine Prinzipdarstellung einer bevorzugten Vorrichtung mit zwei Reformierungsreaktoren,

Fig. 2     eine Prinzipdarstellung eines Ausschnitts aus einem bevorzugten Brennstoffzellensystem gemäß der Erfindung und

Fig. 3     ein Detail der Reaktoranordnung für den Kaltstartfall.

Die Erfindung ist besonders für Brennstoffzellensysteme geeignet, welche in mobilen Systemen verwendet werden.

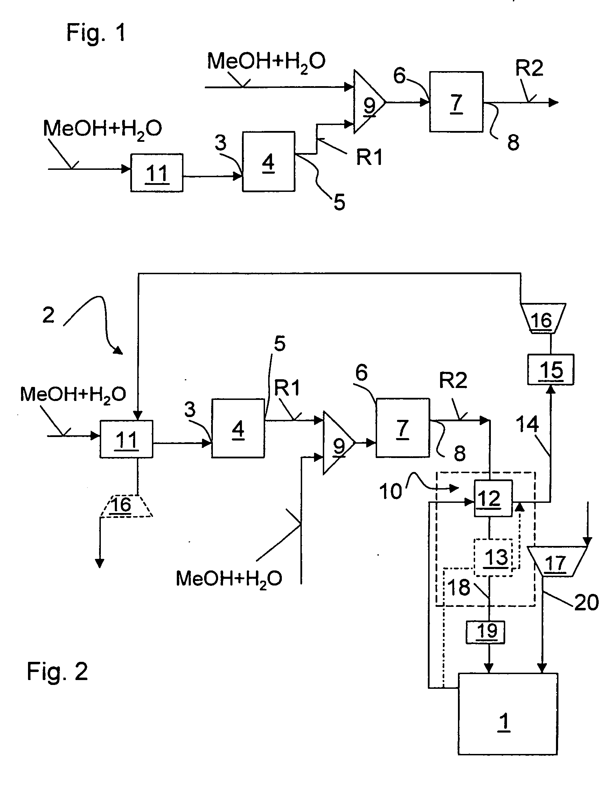

In Fig. 1 ist eine Prinzipdarstellung einer bevorzugten Anordnung in einem erfindungsgemäßen Brennstoffzellensystem dargestellt. Das Brennstoffzellensystem weist eine Brennstoffzelleneinheit 1 und ein Gaserzeugungssystem 2 auf. In dem Gaserzeugungssystem 2 wird aus einem Brennmittel, vorzugsweise einem Alkohol wie Methanol, einem Äther, einem Ester, einem Kohlenwasserstoff oder dergleichen, Wasserstoff zum Betreiben der Brennstoffzelleneinheit gewonnen. In einem üblichen Gaserzeugungssystem ist zumindest eine Reformierungseinheit zur Gewinnung eines wasserstoffreichen Reformats vorgesehen, wobei das Reformat zumindest teilweise der Brennstoffzelleneinheit anodenseitig zugeführt wird. Das Reformat wird dabei üblicherweise in einem Gasreinigungssystem von unerwünschten Beimengungen, wie etwa Kohlenmonoxid, gereinigt.

Gemäß der Erfindung weist das Brennstoffzellensystem einen ersten Reformierungsreaktor 4 zur Erzeugung eines ersten Reformats $R_1$ und einen zweiten Reformierungsreaktor 7 zur Erzeugung eines zweiten Reformats R2 auf. Ein erstes Brennmittel, vorzugsweise ein Gemisch aus Methanol und Wasser, sowie Reaktionsluft wird dem Eingang 3 des ersten Reformierungsreaktors 4 zugeführt. Dabei wird das Gemisch zuvor mit Hilfe eines Wärmetauschers 11 auf eine erste Eintrittstemperatur $T_{1,ein}$ erwärmt. Vorzugsweise liegt diese erste Eintrittstemperatur $T_{1,ein}$ zwischen 200°C und 300°C.

Gemäß der Erfindung ist der katalysatorhaltige Reformierungsreaktor 4 ein autothermer Reaktor mit einem vorzugsweise unselektiven Katalysator, und die Reaktionen in diesem Reaktor laufen so ab, wie sie sich gemäß dem thermodynamischen Gleichgewicht bei den zugeführten Konstituenten einstellen. Dazu weist der erste Reformierungsreaktor 4 zweckmäßigerweise einen Katalysator auf, der derartige Reaktionen zuläßt, vorzugsweise einen entsprechenden Edelmetallkatalysator wie z.B. Platin oder einen Mischkatalysator wie z.B. Platin/Ruthenium. Dabei bildet sich ein Reformat R1 mit einer dem thermodynamischen Gleichgewicht folgenden Zusammensetzung. Die Reformattemperatur des ersten Reformats R1 liegt erheblich über der ersten Eintrittstemperatur $T_{1,ein}$. Als erste Austrittstemperatur $T_{1,aus}$ am Ausgang 5 des ersten Reformierungsreaktors 4 stellt sich eine hohe Temperatur von 600°C bis 900°C ein. Unter autothermem Reaktor wird hier ein Reaktor verstanden, der adiabat betrieben wird und bei dem eine Dampfreformierung des Brennmittels gleichzeitig mit einer partiellen Oxidation zumindest des Brennmittels im gleichen Reaktor abläuft.

Vorteilhaft ist, daß das Brennmittel, welches dem ersten Reformierungsreaktor 4 zugeführt wird, auch erhebliche Anteile an Verunreinigungen aufweisen kann, da die Stoffe bei dem vorhandenen hohen Temperaturniveau zuverlässig zersetzt werden.

Das erste Reformat R1 wird einem zweiten Reformierungsreaktor 7 zur Erzeugung eines zweiten Reformats $R_2$ zugeführt. Dabei wird das erste Reformat R1 in einem Element 9, vorzugsweise einem Mischelement, welches zwischen dem Ausgang 5 des ersten Reformierungsreaktors 4 und einem Eingang 6 des zweiten Reformierungsreaktors 7 auf eine niedrigere Temperatur heruntergekühlt. Diese niedrigere Temperatur entspricht der zweiten Eintrittstemperatur $T_{2,ein}$ in den zweiten Reformierungsreaktor 7. Die zweite Eintrittstemperatur $T_{2,ein}$ liegt vorzugsweise deutlich unter der ersten Austrittstemperatur $T_{1,aus}$. Dazu wird in dem Mischelement 9 ein zweites Brennmittel, vorzugsweise Wasser und Methanol, mit einer geringeren Temperatur $T_{MeOH}$, z.B. Umgebungstemperatur, zugemischt. Das Brennmittel bzw. das Brennmittelgemisch $MeOH+H_2O$ wird dabei verdampft und das Reformat R2 abgekühlt. Die zweite Eintrittstemperatur $T_{2,ein}$ liegt vorzugsweise zwischen 200°C und 500°C. Die Temperatur kann durch die Menge des dem ersten Reformat R1 zugemischten Brennmittels $MeOH+H_2O$ eingestellt werden.

Gemäß der Erfindung ist der zweite Reformierungsreaktor 7 ein adiabater Reaktor. Ein solcher adiabater Reaktor wird nicht von außen gekühlt oder erhitzt, d.h. es wird keine zusätzliche Wärme von außen zugeführt oder nach außen abgeführt, abgesehen von Wärme über die dem Reformierungsreaktor 7 zugeführten oder aus diesem abgeführten umzusetzenden Medien selbst oder von Wärme, die durch Reaktionen der umzusetzenden Medien im Reaktor erzeugt oder konsumiert wird. Der zweite Reformierungsreaktor 7 weist einen Katalysator auf, der selektiv arbeitet. In dem zweiten, adiabaten Reformierungsreaktor 7 finden zwei Reaktionen statt, nämlich eine Wasserdampf-Reformierung des Methanols und eine gleichzeitig ablaufende Shiftreaktion, mit der der Kohlenmonoxidgehalt im Medium reduziert wird. Ein bevorzugter Katalysator für den zweiten Reformierungsreaktor 7 ist ein kupferhaltiger Katalysator wie z.B. CuZn.

Das am Ausgang 8 des zweiten Reformierungsreaktors 7 austretende Reformat R2 weist eine zweite Ausgangstemperatur $T_{2,aus}$ auf, welche unterhalb der ersten Austrittstemperatur $T_{1,aus}$ liegt. Vorzugsweise liegt diese Temperatur zwischen 150°C und 250°C.

Anschließend kann das zweite Reformat R2 einem Gasreinigungssystem 10 zugeführt und das dort gereinigte Reformat anodenseitig der Brennstoffzelleneinheit 1 zugeführt werden.

Vorzugsweise wird die erste Eintrittstemperatur $T_{1,ein}$ über den stromauf des ersten Reformierungsreaktors 4 angeordneten ersten Wärmetauscher 11 eingestellt, indem das Medium dort mit Brennstoffzellenabgas temperiert wird.

Werden der erste und zweite Reformierungsreaktor 4, 7 zusammen betrachtet, so werden die verschiedenen Temperaturniveaus nach außen praktisch nicht sichtbar. Der Austausch der notwendigen Reaktionstemperaturen findet innerhalb des Reformierungsbereichs statt. Dabei sind die Reformierungsreaktoren 4, 7 nicht direkt gekühlt, sondern werden adiabat bzw. autotherm betrieben. Das erste Brennmittel tritt mit einer ersten Eintrittstemperatur $T_{1,ein}$ von z.B. 250°C in den Reformierungsbereich 4, 7 ein, und ein Reformat R2 verläßt den Reformierungsbereich 4, 7 als Endprodukt mit einer höchstens nur etwas geringeren Austrittstemperatur $T_{2,aus}$ von z.B. 200°C aus dem Reformierungsbereich 4, 7 aus. Die Anordnung ermöglicht einen sehr einfachen Reaktoraufbau. Die Reformierungsreaktoren 4, 7 können z.B. als einfache Rohrreaktoren mit Katalysatorfüllung ausgeführt sein.

In Fig. 2 ist ein Prinzipbild eines bevorzugten Brennstoffzellensystems dargestellt. Vergleichbare Komponenten sind mit denselben Bezugszeichen wie in Fig. 1 bezeichnet.

Anschließend an den Reformierungsbereich mit Reformierungsreaktoren 4, 7, folgt ein Gasreinigungssystem 10, in welchem das Reformat R2 von unerwünschten Kohlenmonoxidresten gereinigt wird. Das Gasreinigungssystem 10 kann einstufig ausgebildet sein und mit Anodenabgas und/oder Kathodenabgas der Brennstoffzelleneinheit 1 gekühlt werden. Das Gasreinigungssystem 10 kann jedoch auch zweistufig ausgebildet sein, wobei die erste Stufe 12 vorzugsweise mit Kathodenabgas und die zweite Stufe 13 vorzugsweise mit Anodenabgas der Brennstoffzelleneinheit 1 gekühlt ist. Dies ist in der Figur gestrichelt angedeutet. Vorzugsweise erfolgt in der Reinigungsstufe eine selektive Oxidation von Kohlenmonoxid.

Im Abgasstrom der Brennstoffzelleneinheit 1 ist in Strömungsrichtung nacheinander das Gasreinigungssystem 10, ein Nachbrenner 15 und stromab davon der erste Wärmetauscher 11 angeordnet.

Das System kann sowohl mit niedrigem Druck betrieben werden, z.B. 1 bis 2 bar absolut, oder auch mit höheren Betriebsdrücken. Beim Hochdruckbetrieb ist es vorteilhaft, stromab des Nachbrenners im Abgasstrom einen Expander 16 vorzusehen. In einer bevorzugten Anordnung kann der Expander 16 zwischen Nachbrenner 15 und erstem Wärmetauscher 11 angeordnet sein. Allerdings ist die Temperaturbelastung des Expanders 16 an dieser Stelle hoch. Falls eine geringere Temperaturbelastung gewünscht ist, kann der Expander auch stromab des ersten Wärmetauschers 11 angeordnet sein.

Günstig ist, den Expander 16 mit einem Kompressor 17 in einer Luftzuführung 20 der Brennstoffzelleneinheit 1 zu koppeln.

Im Reformatstrom 18 stromab des Gasreinigungssystems 10 kann ein Reformatkühler 19 angeordnet sein, der vorzugsweise durch ein nicht dargestelltes Kühlmedium der Brennstoffzelleneinheit 1 gekühlt wird.

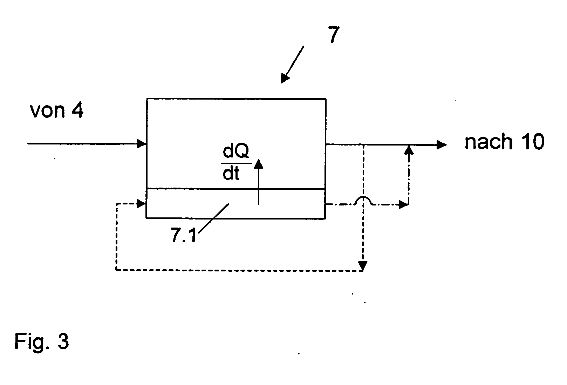

Im Kaltstartfall kann es vorteilhaft sein, im zweiten Reformierungsreaktor 7 zusätzlich Luft zuzudosieren. Dies ist günstig, wenn das Katalysatormaterial im zweiten Reformierungsreaktor 7 entsprechend robust ist. Es ist auch möglich, im Kaltstartfall Abgas des zweiten Reformierungsreaktors 7 in einem als internem Wärmetauscher 7.1 ausgeführten Bereich des Reaktors 7 zu führen, in dem dieses durch selektive katalytische Oxidation von Wasserstoff Wärme zum Aufheizen des Reaktors 7 erzeugt. Dies ist in Fig. 3 dargestellt. Dabei wird Luft nur in diesem Bereich 7.1 zudosiert (nicht dargestellt). Der Wärmefluß $\frac{dQ}{dt}$ von der integrierten, wärmeerzeugenden Startstufe 7.1 in den eigentlichen Reaktorteil des Reformierungsreaktors 7 ist durch einen Pfeil angedeutet. Das erste Reformat R1 gelangt vom ersten Reformierungsreaktor 4 in den zweiten Reformierungsreaktor 7. Ein Teil des dort gebildeten zweiten Reformats R2 wird von einer Abzweigstelle aus in den Teil 7.1 geführt und dort oxidiert. Das Abgas aus 7.1 kann vorzugsweise stromab der Abzweigungsstelle dem zweiten Reformat R2 zugeführt werden.

**Patentansprüche**

1. Brennstoffzellensystem mit einer Brennstoffzelleneinheit (1) und einem Gaserzeugungssystem (2), in dem zumindest eine Reformierungseinheit (4, 7) zur Gewinnung eines wasserstoffreichen Reformats (R2) aus einem Brennmittel, wie Methanol, vorgesehen ist, wobei das Reformat (R2) zumindest teilweise der Brennstoffzelleneinheit (1) anodenseitig zuführt wird,
   **dadurch gekennzeichnet,**
   **daß** ein erster Reformierungsreaktor (4) zur Erzeugung eines ersten Reformats (R1) mit hoher Austrittstemperatur ($T_{1,aus}$) vorgesehen ist, daß ein zweiter Reformierungsreaktor (7) zur Erzeugung eines zweiten Reformats (R2) mit einer zweiten Ausgangstemperatur ($T_{2,aus}$), welche unterhalb der ersten Austrittstemperatur ($T_{1,aus}$) liegt, vorgesehen ist, daß zwischen einem Ausgang (5) des ersten Reformierungsreaktors (4) und einem Eingang (6) des zweiten Reformierungsreaktors (7) ein Element (9) zum Zuführen zumindest eines Brennmittels, wie Methanol, zum ersten Reformat (R1) vorgesehen ist, und daß das erste Reformat (R1) und das zumindest eine Brennmittel, wie Methanol, dem zweiten Reformierungsreaktor (7) zugeführt wird.

2. Brennstoffzellensystem nach Anspruch 1,
   **dadurch gekennzeichnet,**
   **daß** das Element (9) zum Zuführen des Brennmittels ein Mischelement ist.

3. Brennstoffzellensystem nach Anspruch 1,
   **dadurch gekennzeichnet,**
   **daß** stromauf des ersten Reformierungsreaktors (4) ein erster Wärmetauscher (11) angeordnet ist.

4. Brennstoffzellensystem nach Anspruch 1,
   **dadurch gekennzeichnet,**
   **daß** der erste Reformierungsreaktor (4) ein autothermer Reaktor ist.

5. Brennstoffzellensystem nach Anspruch 1,
   **dadurch gekennzeichnet,**
   **daß** der zweite Reformierungsreaktor (7) ein adiabater Reaktor ist.

6. Brennstoffzellensystem nach Anspruch 1,
   **dadurch gekennzeichnet,**
   **daß** das Gasreinigungssystem (10) einstufig ausgebildet ist und mit Anodenabgas und/oder Kathodenabgas der Brennstoffzelleneinheit (1) gekühlt wird.

7. Brennstoffzellensystem nach Anspruch 1,
   **dadurch gekennzeichnet,**
   **daß** das Gasreinigungssystem (10) zweistufig ausgebildet ist, wobei die erste Stufe (12) mit Kathodenabgas und die zweite Stufe (13) mit Anodenabgas der Brennstoffzelleneinheit (1) gekühlt wird.

8. Brennstoffzellensystem nach Anspruch 1,
   **dadurch gekennzeichnet,**
   **daß** im Abgasstrang (14) der Brennstoffzelleneinheit (1) in Strömungsrichtung aufeinanderfolgend das Gasreinigungssystem (10), ein Nachbrenner (15) und stromab davon der erste Wärmetauscher (11) angeordnet ist.

9. Brennstoffzellensystem nach Anspruch 8,
   **dadurch gekennzeichnet,**
   **daß** zwischen Nachbrenner (15) und erstem Wärmetauscher (11) ein Expander (16) angeordnet ist.

10. Brennstoffzellensystem nach Anspruch 7,
    **dadurch gekennzeichnet,**
    **daß** stromab des ersten Wärmetauschers (11) ein Expander (16) im Abgasstrom angeordnet ist.

11. Brennstoffzellensystem nach Anspruch 9 oder 10,
    **dadurch gekennzeichnet,**
    **daß** der Expander (16) mit einem Kompressor (17) in einer Luftzuführung (20) der Brennstoffzelleneinheit (1) gekoppelt ist.

12. Brennstoffzellensystem nach Anspruch 1,
    **dadurch gekennzeichnet,**
    **daß** im Reformatstrom (18) stromab des Gasreinigungssystems (10) ein Reformatkühler (19) angeordnet ist.

**13.** Brennstoffzellensystem nach Anspruch 12,
**dadurch gekennzeichnet,**
**daß** der Reformatkühler (19) durch Kühlmedium der Brennstoffzelleneinheit (1) gekühlt wird.

**14.** Brennstoffzellensystem nach Anspruch 1,
**dadurch gekennzeichnet,**
**daß** der erste Reformierungsreaktor (4) einen unselektiven Katalysator aufweist und daß der zweite Reformierungsreaktor (7) einen selektiven Katalysator aufweist.

**15.** Verfahren zum Betreiben eines Brennstoffzellensystems nach Anspruch 1,
**dadurch gekennzeichnet,**
**daß** einem ersten Reformierungsreaktor (4) zumindest ein Brennmittel, wie Methanol, mit einer ersten Eintrittstemperatur ($T_{1,ein}$) zugeführt wird, im ersten Reformierungsreaktor (4) eine autotherme Reformierungsreaktion durchgeführt wird, wobei die Reaktionen im thermodynamischen Gleichgewicht ablaufen, daß dabei ein erstes Reformat (R1) mit einer hohen ersten Austrittstemperatur ($T_{1,aus}$) entsteht, welches mit einem Brennmittel, wie Methanol, mit geringerer Temperatur ($T_{MeOH}$) gemischt und dadurch auf eine zweite, niedrigere Eintrittstemperatur ($T_{2,ein}$) gebracht wird und einem zweiten Reformierungsreaktor (7) zugeführt wird, in dem unter adiabaten Bedingungen eine Wasserdampfreformierung und eine Wassergas-Shiftreaktion ablaufen, womit ein zweites Reformat (R2) mit einer zweiten Austrittstemperatur ($T_{2,aus}$) aus dem zweiten Reformierungsreaktor (7) erzeugt wird, welche unterhalb der ersten Austrittstemperatur ($T_{1,aus}$) des ersten Reformats (R1) liegt.

**16.** Verfahren nach Anspruch 15,
**dadurch gekennzeichnet,**
**daß** die zweite Austrittstemperatur ($T_{2,aus}$) des zweiten Reformats (R2) höchsten gleich der ersten Eintrittstemperatur ($T_{1,ein}$) des ersten Brennmittels in den ersten Reformierungsreaktor (4) ist oder unterhalb der ersten Eintrittstemperatur ($T_{1,ein}$) liegt.

**17.** Verfahren nach Anspruch 15,
**dadurch gekennzeichnet,**
**daß** die erste Austrittstemperatur ($T_{1,aus}$) aus dem ersten Reformierungsreaktor (4) zwischen 600°C und 900°C liegt.

**18.** Verfahren nach Anspruch 15,
**dadurch gekennzeichnet,**
**daß** die erste Eintrittstemperatur ($T_{1,ein}$) in den ersten Reformierungsreaktor (4) zwischen 200°C und 300°C liegt.

**19.** Verfahren nach Anspruch 15,
**dadurch gekennzeichnet,**
**daß** die zweite Austrittstemperatur ($T_{2,aus}$) aus dem zweiten Reformierungsreaktor (7) zwischen 150°C und 250°C liegt.

**20.** Verfahren nach Anspruch 15,
**dadurch gekennzeichnet,**
**daß** die zweite Eintrittstemperatur ($T_{2,ein}$) in den zweiten Reformierungsreaktor (7) zwischen 200°C und 400°C liegt.

**Claims**

**1.** Fuel cell system having a fuel cell unit (1) and a gas production system (2) in which at least one reformation unit (4, 7) is provided in order to obtain a hydrogen-rich reformate (R2) from a fuel such as methanol, with at least part of the reformate (R2) being supplied to the anode side of the fuel cell unit (1),
**characterized**
**in that** a first reformation reactor (4) is provided in order to produce a first reformate (R1) at a high outlet temperature ($T_{1,off}$), in that a second reformation reactor (7) is provided in order to produce a second reformate (R2) at a second output temperature ($T_{2,off}$), which is below the first outlet temperature ($T_{1,off}$), in that an element (9) for supplying at least one fuel, such as methanol, to the first reformate (R1) is provided between an output (5) of the first reformation reactor (4) and an input (6) of the second reformation reactor (7), and in that the first reformate (R1) and the at least one fuel, such as methanol, are supplied to the second reformation reactor (7).

**2.** Fuel cell system according to Claim 1,
**characterized**
**in that** the element (9) for supplying the fuel is a mixing element.

**3.** Fuel cell system according to Claim 1,
**characterized**
**in that** a first heat exchanger (11) is arranged upstream of the first reformation reactor (4).

**4.** Fuel cell system according to Claim 1,
**characterized**
**in that** the first reformation reactor (4) is an autothermal reactor.

**5.** Fuel cell system according to Claim 1,
**characterized**
**in that** the second reformation reactor (7) is an adiabatic reactor.

**6.** Fuel cell system according to Claim 1,
**characterized**
**in that** the gas purification system (10) has a single stage and is cooled by anode off-gas and/or cathode off-gas from the fuel cell unit (1).

7. Fuel cell system according to Claim 1, **characterized in that** the gas purification system (10) has two stages, with the first stage (12) being cooled by cathode off-gas, and with the second stage (13) being cooled with anode off-gas from the fuel cell unit (1).

8. Fuel cell system according to Claim 1, **characterized in that** the gas purification system (10), a post-burner (15) and, downstream therefrom, the first heat exchanger (11) are arranged successively in the flow direction in the off-gas run (14) of the fuel cell unit (1).

9. Fuel cell system according to Claim 8, **characterized in that** an expander (16) is arranged between the post-burner (15) and first heat exchanger (11).

10. Fuel cell system according to Claim 7, **characterized in that** an expander (16) is arranged in the off-gas flow downstream from the first heat exchanger (11).

11. Fuel cell system according to Claim 9 or 10, **characterized in that** the expander (16) is coupled to a compressor (17) in an air supply (20) to the fuel cell unit (1).

12. Fuel cell system according to Claim 1, **characterized in that** a reformate cooler (19) is arranged in the reformate flow (18) downstream from the gas purification system (10).

13. Fuel cell system according to Claim 12, **characterized in that** the reformate cooler (19) is cooled by a cooling medium for the fuel cell unit (1).

14. Fuel cell system according to Claim 1, **characterized in that** the first reformation reactor (4) has a non-selective catalytic converter, and in that the second reformation reactor (7) has a selective catalytic converter.

15. Method for operation of a fuel cell system according to Claim 1, **characterized in that** a first reformation reactor (4) is supplied with at least one fuel, such as methanol, at a first inlet temperature ($T_{1,in}$), an autothermal reformation reaction is carried out in the first reformation reactor (4), with the reactions taking place in thermodynamic equilibrium, **in that** a first reformate (R1) is in this case created at a high first outlet temperature ($T_{1,off}$) and is mixed with a fuel, such as methanol, at a lower temperature ($T_{MeOH}$), and is thus lowered to a second, lower inlet temperature ($T_{2,in}$) and is supplied to a second reformation reactor (7) in which water-vapour reformation and a steam shift reaction take place in adiabatic conditions, by which means a second reformate (R2) is produced at a second outlet temperature ($T_{2,off}$) from the second reformation reactor (7), which second outlet temperature ($T_{2,off}$) is below the first outlet temperature ($T_{1,off}$) of the first reformate (R1).

16. Method according to Claim 15, **characterized in that** the second outlet temperature ($T_{2,off}$) of the second reformate (R2) is at most equal to the first inlet temperature ($T_{1,in}$) of the first fuel into the first reformation reactor (4) or is below the first inlet temperature ($T_{1,in}$).

17. Method according to Claim 15, **characterized in that** the first outlet temperature ($T_{1,off}$) from the first reformation reactor (4) is between 600°C and 900°C.

18. Method according to Claim 15, **characterized in that** the first inlet temperature ($T_{1,in}$) into the first reformation reactor (4) is between 200°C and 300°C.

19. Method according to Claim 15, **characterized in that** the second outlet temperature ($T_{2,off}$) from the second reformation reactor (7) is between 150°C and 250°C.

20. Method according to Claim 15, **characterized in that** the second inlet temperature ($T_{2,in}$) into the second reformation reactor (7) is between 200°C and 400°C.

**Revendications**

1. Système de piles à combustible avec une un!té de pile à combustible (1) et un système de production de gaz (2), dans lequel il est prévu au moins une unité de reformage (4, 7) pour obtenir un reformat riche en hydrogène (R2) à partir d'un agent combustible, tel que le méthanol, dans lequel le reformat (R2) est envoyé au moins en partie du côté anodique à l'unité de pile à combustible (1), **caractérisé en ce qu'**il est prévu un premier réacteur de reformage (4) pour la production d'un premier reformat (R1) avec une haute température de sortie ($T_{1,sortie}$), **en ce qu'**il est prévu un deuxième réacteur de reformage (7) pour la production d'un deuxième reformat (R2) avec une deuxième température de sortie ($T_{2,sortie}$), qui est inférieure à la première température de sortie ($T_{1,sortie}$), **en ce qu'**il est prévu, entre une sortie (5) du premier réacteur de reformage (4) et une entrée (6) du deuxième réacteur de reformage (7), un élément (9) pour ajouter au moins un agent combustible, tel que du méthanol, au premier reformat (R1), et **en ce que** le premier reformat (R1) et l'au moins un agent combustible, tel que le méthanol, est envoyé au deuxième réacteur de reformage (7).

2. Système de piles à combustible selon la revendication 1, **caractérisé en ce que** l'élément (9) pour ajouter un agent combustible est un élément de mélange.

3. Système de piles à combustible selon la revendication 1, **caractérisé en ce qu'**un premier échangeur de chaleur (11) est disposé en amont du premier réacteur de reformage (4).

4. Système de piles à combustible selon la revendication 1, **caractérisé en ce que** le premier réacteur de reformage (4) est un réacteur autothermique.

5. Système de piles à combustible selon la revendication 1, **caractérisé en ce que** le deuxième réacteur de reformage (7) est un réacteur adiabatique.

6. Système de piles à combustible selon la revendication 1, **caractérisé en ce que** le système d'épuration de gaz (10) est réalisé en une étape et est refroidi avec du gaz d'échappement anodique et/ou du gaz d'échappement cathodique de l'unité de pile à combustible (1).

7. Système de piles à combustible selon la revendication 1, **caractérisé en ce que** le système d'épuration de gaz (10) est réalisé en deux étapes, dans lequel la première étape (12) est refroidie avec du gaz d'échappement cathodique et la deuxième étape (13) est refroidie avec du gaz d'échappement anodique de l'unité de pile à combustible (1).

8. Système de piles à combustible selon la revendication 1, **caractérisé en ce que** le système d'épuration de gaz (10), un post-brûleur (15) et en aval de celui-ci le premier échangeur de chaleur (11) sont disposés successivement dans la direction d'écoulement dans la ligne des gaz d'échappement (14) de l'unité de pile à combustible (1).

9. Système de piles à combustible selon la revendication 8, **caractérisé en ce qu'**un expanseur (16) est disposé entre le post-brûleur (15) et le premier échangeur de chaleur (11).

10. Système de piles à combustible selon la revendication 7, **caractérisé en ce qu'**un expanseur (16) est disposé dans le courant de gaz d'échappement en aval du premier échangeur de chaleur (11).

11. Système de piles à combustible selon la revendication 9 ou 10, **caractérisé en ce que** l'expanseur (16) est couplé à un compresseur (17) dans une arrivée d'air (20) de l'unité de pile à combustible (1).

12. Système de piles à combustible selon la revendication 1, **caractérisé en ce qu'**un refroidisseur de reformat (19) est disposé dans le courant de reformat (18) en aval du système d'épuration de gaz (10).

13. Système de piles à combustible selon la revendication 12, **caractérisé en ce que** le refroidisseur de reformat (19) est refroidi par l'agent réfrigérant de l'unité de pile à combustible (1).

14. Système de piles à combustible selon la revendication 1, **caractérisé en ce que** le premier réacteur de reformage (4) comprend un catalyseur non sélectif et **en ce que** le deuxième réacteur de reformage (7) comprend un catalyseur sélectif.

15. Procédé de conduite d'un système de piles à combustible selon la revendication 1, **caractérisé en ce que** l'on envoie dans un premier réacteur de reformage (4) au moins un agent combustible, tel que le méthanol, avec une première température d'entrée ($T_{1,entrée}$), on effectue dans le premier réacteur de reformage (4) une réaction de reformage autothermique, les réactions se déroulant à l'équilibre thermodynamique, **en ce qu'**il se forme ainsi un premier reformat (R1) avec une première haute température de sortie ($T_{1,sortie}$), qui est mélangé à un agent combustible, tel que le méthanol, avec une température inférieure ($T_{MeOH}$) et est ainsi amené à une deuxième température d'entrée plus basse ($T_{2,entrée}$) et est envoyé à un deuxième réacteur de reformage (7), dans lequel un reformage de vapeur d'eau et une réaction de déplacement de gaz à l'eau se déroulent dans des conditions adiabatiques, produisant un deuxième reformat (R2) avec une deuxième température de sortie ($T_{2,sortie}$) hors du deuxième réacteur de reformage (7), qui est inférieure à la première température de sortie ($T_{1,sortie}$) du premier reformat (R1).

16. Procédé selon la revendication 15, **caractérisé en ce que** la deuxième température de sortie ($T_{2,sortie}$) du deuxième reformat (R2) est au maximum égale à la première température d'entrée ($T_{1,entrée}$) du premier agent combustible dans le premier réacteur de reformage (4) ou est inférieure à la première température d'entrée ($T_{1,entrée}$).

17. Procédé selon la revendication 15, **caractérisé en**

ce que la première température de sortie ($T_{2,sortie}$) hors du premier réacteur de reformage (4) est comprise entre 600°C et 900°C.

18. Procédé selon la revendication 15, **caractérisé en ce que** la première température d'entrée ($T_{1,entrée}$) dans le premier réacteur de reformage (4) est comprise entre 200°C et 300°C.

19. Procédé selon la revendication 15, **caractérisé en ce que** la deuxième température de sortie ($T_{2,sortie}$) hors du deuxième réacteur de reformage (7) est comprise entre 150°C et 250°C.

20. Procédé selon la revendication 15, **caractérisé en ce que** la deuxième température d'entrée ($T_{2,entrée}$) dans le deuxième réacteur de reformage (7) est comprise entre 200°C et 400°C.

EP 1 213 779 B1

Fig. 1

MeOH+H₂O

MeOH+H₂O

Fig. 2

MeOH+H₂O

MeOH+H₂O

9

7

von 4

$$\frac{dQ}{dt}$$

nach 10

7.1

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19624435 C1
- US 6123913 A